(19) Europäisches Patentamt
European Patent Office
Office européen des brevets

(11) Numéro de publication : **0 250 518 B1**

(12) # FASCICULE DE BREVET EUROPEEN

(45) Date de publication du fascicule du brevet : **13.03.91 Bulletin 91/11**

(51) Int. Cl.$^5$ : **H01B 1/12**, H01M 4/60

(21) Numéro de dépôt : **87900166.7**

(22) Date de dépôt : **11.12.86**

(86) Numéro de dépôt international : **PCT/FR86/00432**

(87) Numéro de publication internationale : **WO 87/03734 18.06.87 Gazette 87/13**

(54) **POLYMERES CONDUCTEURS ELECTRONIQUES AZOTES CONTENANT DU SOUFRE, LEURS PROCEDES DE PREPARATION ET GENERATEUR ELECTROCHIMIQUE UTILISANT CES POLYMERES.**

(30) Priorité : **13.12.85 FR 8518484**

(43) Date de publication de la demande : **07.01.88 Bulletin 88/01**

(45) Mention de la délivrance du brevet : **13.03.91 Bulletin 91/11**

(84) Etats contractants désignés : **DE FR GB IT NL**

(56) Documents cités : **EP-A- 0 176 877**

(73) Titulaire : **COMMISSARIAT A L'ENERGIE ATOMIQUE**
**29-33, rue de la Fédération BP 510**
**F-75752 Paris Cedex 15 (FR)**

(72) Inventeur : **GENIES, Eugène**
**La Biollette**
**Rue Troussai F-38120 Saint-Egrève (FR)**

(74) Mandataire : **Mongrédien, André et al**
**c/o BREVATOME 25, rue de Ponthieu**
**F-75008 Paris (FR)**

**EP 0 250 518 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention a pour objet de nouveaux polymères conducteurs électroniques azotés contenant du soufre et leurs procédés de préparation. Ces polymères sont particulièrement bien adaptés pour constituer une matière active d'électrode d'un générateur électrochimique ou batterie rechargeable et plus spécialement la matière active positive de ce générateur.

Outre ces applications spécifiques, les polymères conducteurs de l'invention peuvent être utilisés comme composants pour des éléments de circuit électronique passif ou actif, comme blindage magnétique, comme matériaux servant à éliminer les charges électrostatiques, comme matrices ou liants entrant dans la composition de matériaux composites, comme convertisseurs voltaïques, comme couches électrochromes d'une cellule d'affichage électrochrome, comme matériaux d'électrode à propriétés spécifiques utilisés par exemple pour la détermination du potentiel ou du pH d'une solution, etc...

En résumé les polymères conducteurs électroniques selon l'invention peuvent être utilisés dans tous les domaines techniques employant généralement des matériaux conducteurs.

Parmi les polymères conducteurs électroniques connus soulevant un grand intérêt, notamment du fait de leur grande stabilité, on peut citer les polyanilines. Par polyanilines on entend généralement les polymères provenant de la condensation de l'aniline elle-même, mais aussi de celle de ses dérivés dont le dimère, l'aminoparadiphénylaniline. Ces polymères se distinguent par le fait qu'ils peuvent subir deux types de transfert de charge et qu'ils peuvent être utilisés comme matière active d'électrode aussi bien positive que négative dans un générateur électrochimique fonctionnant à température ambiante.

La préparation de ces polyanilines et leur application en tant que matière active d'électrode dans un générateur électrochimique ont notamment fait l'objet d'un brevet français n° 2 545 494, publié le 9 novembre 1984, au nom du demandeur.

Bien que les polyanilines se trouvent être des polymères conducteurs doués de l'une des plus fortes capacités massiques, voisines de 150 Ah/kg, cette capacité massique est encore un peu trop faible pour obtenir un fonctionnement optimal du générateur électrochimique utilisant ces polymères comme matière active d'électrode.

En outre, l'utilisation de ces polyanilines comme matières actives d'électrode nécessite l'emploi d'un volume important d'électrolyte du fait que pendant la charge du générateur les sels de la solution sont insérés dans les matières actives, positives et négatives d'électrode.

Dans le cas d'un électrolyte à base de perchlorate de lithium ($LiClO_4$), la réaction de charge à l'électrode positive avec la polyaniline, symbolisée par l'abréviation PANi, s'écrit :

$$PANi + CLO_4^- \rightarrow PANi, CLO_4^- + 1e^-$$

A l'électrode négative la réaction de charge pour une électrode en lithium s'écrit :

$$Li^+ + 1e^- \rightarrow Li$$

Les réactions de décharges sont les réactions inverses.

Il ressort de ces deux équations électrochimiques que l'électrolyte $LiClO_4$ est consommé à la charge et libéré à la décharge.

Par ailleurs, il est connu d'utiliser le soufre comme matière active positive d'électrode du fait de sa capacité massique elevée, de l'ordre de 1675 Ah/kg. Le soufre comme matière active positive est généralement associé au sodium constituant la matière active négative d'électrode.

Le générateur électrochimique sodium-soufre est bien connu pour être l'une des batteries les plus performantes. Malheureusement, cette batterie n'est capable de fonctionner qu'à haute température, c'est-àdire à une température de l'ordre de 300°C.

Enfin, il est connu par le document EP-A-0 176 877 (art. 54.3 de la CBE) des compositions à base d'un polymère conducteur électronique comportant au moins une chaîne polysulfurée, ce polymère étant en particulier une polyaniline. Malheureusement, cette composition ne peut pas être utilisée dans un générateur électrochimique rechargeable.

La présente invention a justement pour objet de nouveaux polymères conducteurs électroniques azotés et un procéde de préparation de ces polymères permettant de remédier aux différents inconvénients ci-dessus. En particulier, ces polymères sont doués d'une forte capacité massique et d'une bonne stabilité thermique. En outre, ces polymères peuvent être utilisés dans un générateur électrochimique rechargeable fonctionnant à température ambiante dans lequel le volume d'électrolyte est réduit au maximum.

De façon plus précise, l'invention a pour objet un polymère conducteur électronique azoté se caracterisant

en ce qu'il est choisi parmi les polysulfures ce la polyaniline, les polysulfures de la poly(paraaminodiphénylamine), les polysulfures de la polytoluidine, les polysulfures du polyaminophénol et les polysulfures de la polycarbaxyaniline.

Les polysulfures du polyaminophénol, par rapport aux autres polysulfures, ont l'avantage d'offrir des paliers de décharge beaucoup plus plats.

Les polymères selon l'invention, grâce à la présence d'un anion polysulfure dans leur composition, permet d'éviter, lors de leur utilisation comme matière active positive d'électrode dans un générateur électrochimique, l'insertion des anions de l'électrolyte du générateur dans la matière positive d'électrode au cours de la charge du générateur.

Ceci permet donc, à condition toutefois de compenser les anions polysulfures par une charge en cations pendant la décharge ($Li^+$ par exemple) des polymères de ne pas faire varier la composition de l'électrolyte au cours des réactions de charge et de décharge du générateur électrochimique.

Il suffit alors d'utiliser un film mince d'électrolyte ou tout simplement un matériau poreux humecté d'une solution électrolytique. Cette réduction importante du volume de l'électrolyte conduit à un gain de poids important pour l'ensemble du générateur électrochimique.

Par ailleurs, les anions polysulfures des polymères selon l'invention ont l'avantage de pouvoir s'oxyder, et inversement les produits résultants de l'oxydation des polysulfures de se réduire, dans des zones de potentiel électrochimique très légèrement inférieures à celles des polyanilines, ce qui permet malgré tout d'augmenter de façon notoire la capacité massique de ces polymères par rapport à celle des polyanilines seules.

Afin de mieux expliciter les phénomènes électrochimiques mis en jeu par les polymères selon l'invention dans un générateur électrochimique, on donne ciaprès les réactions de charge α et de décharge β d'un générateur comportant un polysulfure de la polyaniline, symbolisée par l'abréviation PANi, comme matière active d'électrode positive, et du lithium comme matière active d'électrode négative. Ces réactions s'écrivent :

$$PANi^{+}, 1/2(S_p)^{2-} + Li \underset{\alpha}{\overset{\beta}{\rightleftharpoons}} PANi, 1/2(p-r)(S_p)^{2-}, (p-r)Li^{+},$$

avec r un entier tel que $1 \leq r \leq p$ et $1 \leq p \leq 20$.

Il ressort bien de ces équations électrochimiques que l'électrolyte ($LiClO_4$ par exemple) n'est pas consommé et que, par ailleurs, l'anion polysulfure participe aux réactions électrochimiques augmentant ainsi la capacité massique du polymère de façon considérable, par rapport à la polyaniline seule.

Les réactions de charge et de décharge ci-dessus sont tout à fait transposables à ces matières actives d'électrode positive en un polysulfure azoté de l'invention autre que le polysulfure de PANi.

Dans le cas du pentasulfure de polyaniline, ce composé peut s'écrire sous forme chargée $PANi^+$, $1/2(S^5)^{2-}$ et sous forme déchargée PANi, $5/2S^{2-}$, $5Li^+$.

Le nombre total d'électrons échanges lors de la charge ou de la décharge du générateur est égal à 5 pour une masse de 125 g de PANi et 80 g de soufre. L'échange d'un électron correspondant à une quantité d'électricité de 96500 Coulombs, l'échange de 220 électrons correspond à 482500 Coulombs. Ceci représente une capacité massique d'environ 653 Ah/ko. Ces valeurs étant théoriques, il est bien évident qu'il sera difficile de les atteindre en raison des phénomènes d'interaction électrostatique qui interviennent dans de tels matériaux. Ceci permet simplement de mettre en évidence que les capacités massiques que l'on obtient expérimentalement sont supérieures à celle de la polyaniline seule.

Les polysulfures des dérivés monosubstitués de la polyaniline selon l'invention, dont font partie les polysulfures de la polytoluidine, de la polycarboxyaniline et du polyaminophénol, peuvent avoir leur substituant en position ortho, para ou méta du groupement $NH_2$ de l'aniline.

Pour des substituants en position para, la polymèrisation se fait principalement en position ortho alors que pour des substituants en position ortho ou para, la polymérisation se fait en position para.

De préférence, les polymères conducteurs de l'invention présentent la formule A :

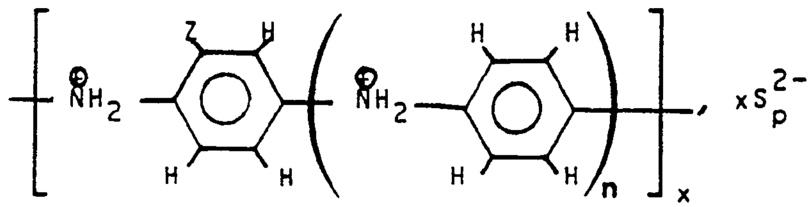

ou la formule B :

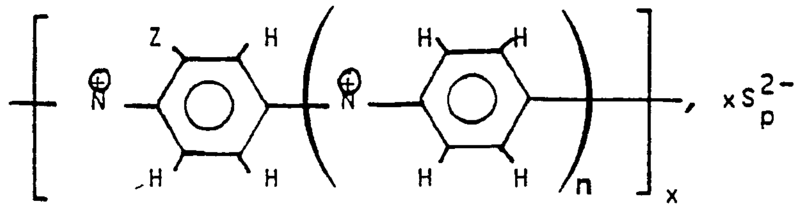

ou la formule C :

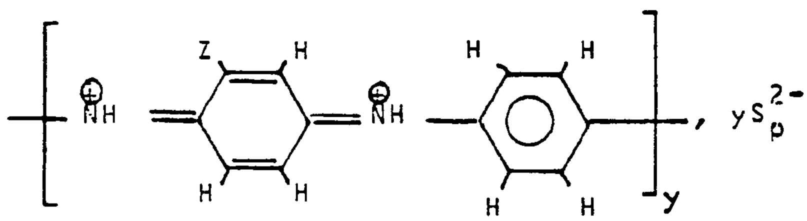

formules dans lesquelles x, y, n et p sont des entiers tels que $10 \leq x \leq 1000000$, $5 \leq y \leq 500000$, $0 \leq n \leq 1$ et $1 \leq p \leq 20$ et dans lesquelles Z représente H, $CH_3$, OH ou COOH, à condition que n=0 quand Z représente $CH_3$, OH ou COOH.

Les polysulfures de la polytoluidine et en particulier de la polyorthotoluidine présentent, grâce à la présence du groupement méthyl notamment en ortho de $NH_2$, des propriétés de toxicité de ces éventuels produits de dégradation plus faibles que celles des autres polymères azotés polysulfurés de l'invention.

L'invention a aussi pour objet un premier procédé de préparation d'un polymère conducteur électronique azoté contenant du soufre, ce polymère étant en particulier l'un de ceux cités précédemment.

Ce premier procédé se caractérise en ce qu'il comprend les étapes suivantes :

(a) préparer un polymère intermédiaire par polymérisation d'au moins un premier composé choisi parmi l'aniline, la para-aminodiphénylamine et leurs dérivés,

(b) charger le polymère intermédiaire d'au moins un second composé choisi parmi le soufre, un sulfure ou un polysulfure inorganique, et

(c) soumettre le polymère intermédiaire chargé à des cycles charge-décharge électrique afin d'obtenir un polysulfure de la polyaniline, un polysulfure de la poly(para-aminodiphénylamine), un polysulfure d'un dérivé de la polyaniline ou un polysulfure d'un dérivé de la poly(para-aminodiphénylamine).

Dans ce premier procédé, l'étape (c) est essentielle car elle conduit à des réactions du type électrophilenucléophile entre les formes oxydées du polymère intermédiaire et du soufre ou des sulfures produisant en fait un nouveau matériau, appelé polysulfure de polyaniline, de polytoluidine, de..., mais qui est probablement plus complexe.

Cette étape (c) peut être rapprochée des réactions de "formatage" bien connues des fabricants de batteries.

Les dérivés de l'aniline ou de la para-aminodiphénylamine peuvent comporter un ou plusieurs substituants,

identiques ou différents placés en position ortho, méta ou para de $NH_2$.

Pour des substituants en position para uniquement, la polymérisation se fait principalement en position ortho et pour des substituants en position ortho et/ou méta, la polymérisation se fait uniquement en position para.

Le premier procédé permet d'obtenir en particulier des polymères conducteurs électroniques azotés répondant aux formules A, B ou C ci-dessous, suivant les conditions de fabrication du polymère intermédiaire.

Les polymères conducteurs électroniques azotés obtenus par le procédé selon l'invention présentent la formule A :

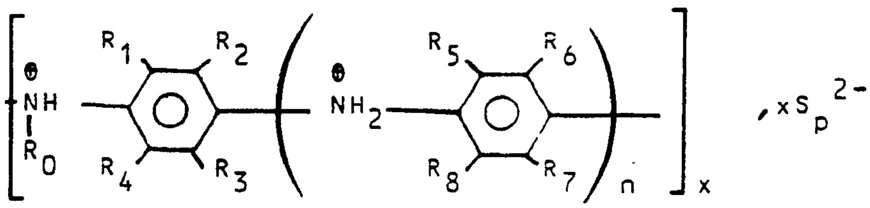

ou la formule B :

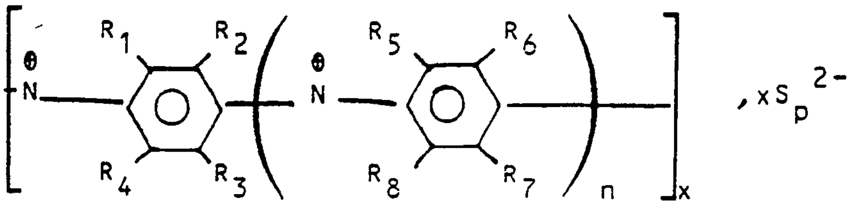

ou la formule C :

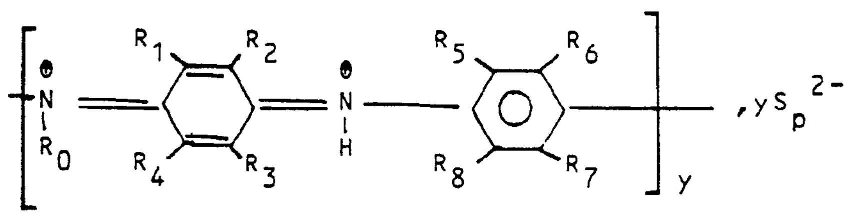

formules dans lesquelles x, y, n et p sont des entiers tels que $10 \leq x \leq 1000000$, $5 \leq y \leq 500000$, $0 \leq n \leq 1$ et $1 \leq p \leq 20$ et dans lesquelles $R_0$, $R_1$, $R_2$, $R_3$, $R_4$, $R_5$, $R_6$, $R_7$ et $R_8$, qui peuvent être identiques ou différents, représentent l'hydrogène, un halogène, un groupement choisi parmi OH, $CH_3$, $NO_2$, $NH_2$, $CF_3$, $SO_2$, CN, SCN, OCN,

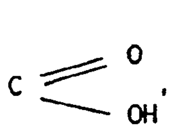 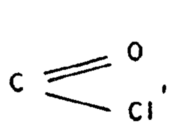 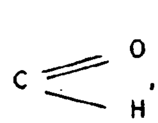 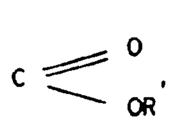 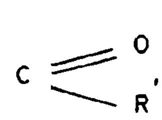

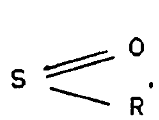 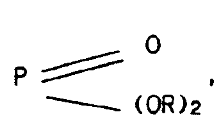

$SO_2R$, SR, OR, R étant un radical alkyle linéaire ou ramifié, ou un radical aryle, ou représente un radical choisi parmi les radicaux alkyle, linéaire ou ramifié, et aryle comportant éventuellement un ou plusieurs substituants choisis dans le groupe comprenant OH, $NO_2$, $NH_2$, $CF_3$, $SO_2$, CN, CL, F, SCN, OCN,

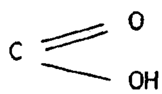, 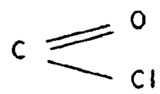, 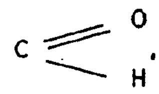, 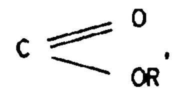, 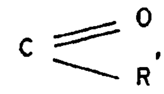,

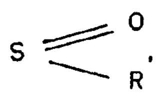, 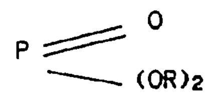,

$SO_2R$, SR, OR, R étant un radical alkyle, linéaire ou ramifié, ou un radical aryle.

Ces polymères présentent les mêmes propriétés et avantages que ceux des polymères azotés cités précédemment.

Dans le cas particulier où $R_0$ représente un atome d'hydrogéne, les fomules A, B et C correspondent à trois formes différentes du même polymère ; la formule A correspond à une forme réduite protonée ou acidifiée, la formule B à une forme oxydée et la formule C à une forme oxydée acidifiée ou protonée.

La composition exacte des polymères conducteurs obtenus dépend surtout des applications envisagées. En particulier p peut prendre toutes les valeurs allant de 1 à 6.

Comme halogène entrant dans la constitution des polymères conducteurs selon l'invention, on peut citer le fluor, le brome, le chlore ou l'iode.

Les radicaux alkyles, substitués ou non, liés directement aux azotes ou aux cycles ainsi que le radical alkyle R comporte 1 à 100 atomes de carbone. Les radicaux alkyles utilisables sont par exemple les radicaux méthyle, éthyle, n-propyle, isopropyle, n-butyle, isobutyle, n-pentyle, etc...

De même, comme radicaux aryles, substitués ou non, liés directement aux azotes et aux cycles, ainsi que le radical aryle R peuvent comporter jusqu'à 100 atomes de carbone. Les radicaux aryles utilisables sont par exemple les radicaux benzénique, naphtalénique, anthracénique, phénanthrènique.

Le premier composé présente avantageusement la formule (I) :

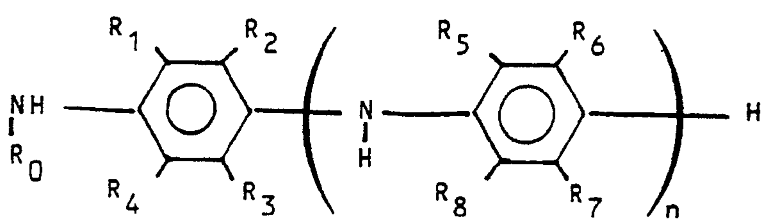

dans laquelle n est un nombre valant 0 ou 1 et $R_0$, $R_1$, $R_2$, $R_3$, $R_4$, $R_5$, $R_6$, $R_7$ et $R_8$, qui peuvent être identiques ou différents, représentent l'hydrogène, un halogène, un groupement choisi parmi ceux donnés précédemment, un radical alkyle, linéaire ou ramifié, éventuellement substitué, ou un radical aryle, éventuellement substitué ; les radicaux alkyle et aryle utilisables sont ceux donnés précédemment.

En particulier le premier composé présente la formule :

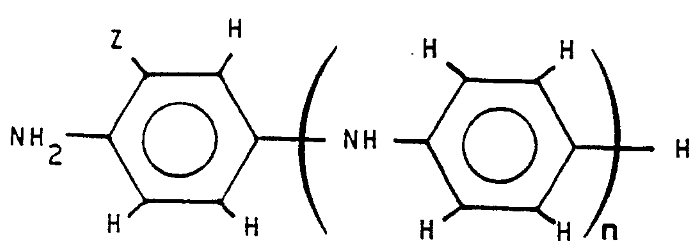

dans laquelle Z représente H, $CH_3$, OH ou COOH et n un nombre valant 0 ou 1, à condition que n=0 quand Z représente $CH_3$, OH ou COOH.

De façon préférentielle, le sulfure ou le polysulfure inorganique est un sulfure ou un polysulfure d'ammonium ou d'un métal alcalin. Comme sulfure de métal alcalin, on peut citer le sulfure de sodium, de potassium, de lithium, de rubidium, de césium, le sulfure acide de sodium (NaHS) ou de potassium (KHS). Comme polysulfure, on peut citer les polysulfures de potassium, de césium et de rubidium de formule $M_2S_t$ avec t allant de 2 à 6, les polysulfures de sodium de formule $Na_2S_z$ avec z allant de 2 à 5, le disulfure ou tétrasulfure de lithium, le pentasulfure ou le disulfure d'ammonium, etc... Toutefois, d'autres sulfures ou polysulfures peuvent être utilisés comme par exemple le sulfure d'hydrogène ($H_2S$), le persulfure d'hydrogène ($H_2S_2$), les polysulfures d'hydrogène $H_2S_3$ et $H_2S_5$, le sulfure de zinc, d'aluminium, etc...

La préparation du polymère intermédiaire est avantageusement réalisée comme décrite dans le document FR-A-2 545 494 cité précédemment, par oxydation chimique ou électrochimique dans un milieu acide riche en fluorures, d'un ou plusieurs monomères répondant à la formule générale (I). Avec un tel procédé de préparation du polymère intermédiaire, les polymères selon l'invention répondront à la formule C.

Selon une première variante de mise en oeuvre du premier procédé, on réalise l'étape (b) en mélangeant intimement le polymère intermédiaire et le second composé, ce second composé représentant 1 à 50% en poids du mélange polymère intermédiaire-second composé. Dans cette variante, le second composé peut se présenter à l'état de soufre, de sulfure et/ou de polysulfure inorganiques.

Selon une seconde variante de mise en oeuvre du premier procédé, l'étape (b) consiste à faire précipiter le second composé dans une suspension du polymère intermédiaire, en solution. Dans cette variante, le second composé sera de préférence à l'état de soufre et/ou de polysulfure inorganique.

La suspension du polymère intermédiaire peut être réalisée dans de l'eau ou dans un grand nombre de solvants organiques tels que le diméthyl-sulfoxyde (DMSO), le tétrahydrofurane (THF), l'hexaméthyl-phosphotriamine (HMPT), les éthers dont l'éther éthylique, ou le dichlorométhane ($CH_2Cl_2$). La précipitation du soufre et/ou des polysulfures inorganiques peut être réalisée soit par addition d'un autre solvant tel que l'acétonitrile, le benzonitrile, le nitrobenzène, le carbonate de propylène, soit en solution aqueuse par modification du pH de la solution, technique bien connue de l'homme de l'art.

Selon une troisième variante de mise en oeuvre, l'étape (b) du premier procédé consiste à oxyder un sulfure et/ou un polysulfure inorganiques, tels que ceux décrits précédemment, dans une suspension du polymère intermédiaire, en solution. Le produit d'oxydation, qui est le soufre, précipite.

De nombreux oxydants minéraux classiques peuvent être utilisés tels que l'oxygène, l'eau oxygénée ou autre péroxyde tel que le tétroxyde d'osmium, mais aussi le soufre lui-même ainsi que tout système oxydo-réducteur dont le potentiel est supérieur au potentiel d'oxydation des sulfures ou polysulfures en soufre sans atteindre le passage aux sulfites ou sulfates, et en particulier supérieur à 0,3 volt par rapport à l'électrode à hydrogène, tel que les permanganates, les persulfates et les bichromates d'ammonium ou des métaux alcalins, comme par exemple le permanganate de potassium ou le bichromate de potassium, dans des conditions telles que l'oxydation n'aille pas jusqu'à l'état de sulfites ou sulfates.

La suspension du polymère intermédiaire peut être réalisée, dans l'un des solvants organiques cités précédemment mais aussi en milieu alcoolique. Comme solution alcoolique on peut citer l'éthanol absolu, le butanol, le propanol.

Les polymères conducteurs électroniques décrits précédemment peuvent aussi être obtenus au moyen d'un second procédé de préparation.

Ce second procédé se caractérise en ce qu'il comprend les étapes suivantes :

(a') préparer un polymère intermédiaire par polymérisation d'au moins un premier composé choisi parmi la para-aminodiphénylamine, les toluidines, les aminophénols et les carboxyanilines, et

(b') oxyder le polymère intermédiaire dans une solution contenant au moins un second composé choisi parmi le soufre, un sulfure ou polysulfure inorganique afin d'obtenir un polysulfure de la poly(paraaminodiphénylamine), un polysulfure de la polytoluidine, un polysulfure du polyaminophénol, ou un polysulfure de la carboxyaniline.

Ce second procédé permet aussi la production du nouveau matériau ayant une structure propre.

Comme pour le premier procédé, la polymérisation se fait en position para pour des substituants en position ortho ou méta de $NH_2$ et surtout en position ortho pour des substituants en position para.

L'oxydation du polymère intermédiaire peut être réalisée soit électrochimiquement, soit chimiquement en utilisant l'un des agents oxydants cités précédemment hormis le soufre.

Comme sulfure ou polysulfure inorganique on peut utiliser, comme pour le premier procédé de fabrication, un sulfure ou un polysulfure d'ammonium ou d'un métal alcalin. De même, le polymère intermédiaire peut être obtenu par oxydation, chimique ou électrochimique, en milieu acide riche en fluorures, d'un ou plusieurs composés répondant en particulier à la formule (I) donnée précédemment.

Selon un premier mode de mise en oeuvre de ce second procédé, on réalise l'étape (b') en oxydant le polymère intermédiaire dans une solution contenant du soufre colloïdal et/ou un polysulfure inorganique en suspension. La solution peut être de l'eau ou un milieu organique tel que les alcools ou les éthers. Ce milieu peut aussi être constitué par l'un des solvants cités précédemment.

Selon un second mode de mise en oeuvre du second procédé, on réalise l'oxydation du polymère intermédiaire dans une solution acide contenant un sulfure inorganique.

La solution acide est avantageusement une solution riche en fluorures par exemple saturée en sulfure d'hydrogène. Comme milieu riche en fluorures, on peut utiliser des mélanges $RNH_2$ HF avec R représentant

un radical alkyle, des mélanges de pyridine, HF ou des mélanges $NH_4F$, $\alpha HF$ avec $\alpha$ allant de 1 à 4. En particulier $\alpha$ vaut 2,35, ce qui correspond à l'eutectique $NH_3$, HF. Cette solution eutectique sera appelée par la suite "bain N".

Lorsque l'on utilise un milieu acide riche en fluorures, il est possible de former directement les polymères conducteurs de l'invention par oxydation chimique ou électrochimique d'un ou plusieurs monomères répondant en particulier à la formule (I), en présence d'un sulfure inorganique. Cette méthode a l'avantage d'être simple et rapide.

L'oxydation du polymère intermédiaire en milieu acide peut aussi être obtenue avec des acides ou mélanges d'acides classiques dont l'équivalent pH est inférieur à 0 par référence à l'eau comme par exemple l'acide sulfurique, l'acide phosphorique, l'acide fluorhydrique, l'acide benzène sulfonique, l'acide chlorhydrique, l'acide tétrafluoroborique, l'acide fluoro- ou chloro-sulfurique, etc...

Il est aussi possible de réaliser l'oxydation du polymère intermédiaire dans un solvant organique tel que l'acétonitrile, le nitrométhane, le nitrobenzène, le benzonitrile ou des solutions de polyanions tels que le Nafion®.

Les procédés de l'invention permettent d'obtenir des polysulfures conducteurs électroniques azotés utilisables dans un générateur électrochimique comme matière active d'électrode rechargeable, à l'inverse d'un certain nombre de procédés connus.

L'invention a encore pour objet un générateur électrochimique notamment rechargeable comportant, dans un récipient étanche, un premier collecteur de courant recouvert d'une matière active positive, un second collecteur de courant recouvert d'une matière active négative, les matières actives baignant dans un électrolyte, caractérisé en ce que la matière active positive est formée d'un polymère conducteur tel que décrit précédemment.

La matière active positive d'électrode peut se présenter sous la forme d'un film mince, c'est-à-dire d'épaisseur inférieure à 1 mm, ou bien sous la forme d'une pastille comprimée, contenant du noir de carbone. L'introduction de noir de carbone permet d'améliorer le passage de courant ; un tel composé est généralement appelé agent de percolation.

La matière active négative d'électrode peut être formée d'un métal réactif tel que le lithium, d'un alliage de lithium tel qu'un alliage de lithium et d'aluminium, d'un polymère conjugué conducteur, de carbone ou d'un matériau composite. De préférence, on utilise comme matière active négative le lithium ou les alliages de lithium et d'aluminium.

Les électrolytes associés à des électrodes à base de lithium sont de préférence des sels de lithium tels que le fluorure, le chlorure, le perchlorate, le perborate, le persulfate ou l'hexafluorophosphate. Néanmoins, on peut employer d'autres électrolytes tels que l'hexafluorophosphate de sodium, le fluoroborate, le chlorure ou le fluorure de tétraméthylammonium.

Ces électrolytes sont en particulier dissous dans un solvant organique comme par exemple les éthers linéaires tels que le diméthoxyéthane, les éthers cycliques comme par exemple le dioxolane ou les méthylhydrofuranes, ou des esters tels que le carbonate de propylène.

D'autres caractéristiques et avantages de l'invention ressortiront mieux de la description qui va suivre, donnée à titre illustratif et non limitatif en référence à l'unique figure annexée, représentant, en coupe longitudinale, un générateur électrochimique comportant comme matière active d'électrode un polymère selon l'invention.

Le générateur rechargeable représenté sur la figure comprend un boîtier 1 étanche et isolant par exemple en polyéthylène, contenant un électrolyte 2. Cet électrolyte est formé d'une solution molaire de perchlorate de lithium dissous dans du carbonate de propylène.

Dans cet électrolyte sont placés un premier conducteur de courant 3 recouvert d'une matière active positive 5 et un collecteur 7 en contact avec une matière active négative 9. Ces collecteurs 3 et 7 se présentent sous forme de grilles ou de plaques.

Le premier collecteur 3 est constitué d'une électrode de carbone et la matière active positive 5 d'un polymère selon l'invention, déposé sous forme d'un film par oxydation électrochimique dans un bain "N", ou bien sous forme d'une pastille comprimée directement sur l'électrode. Le second collecteur 7 en acier inoxydable est recouvert, par exemple par électrolyse, d'une couche 9 de lithium ou d'un alliage de lithium-aluminium jouant le rôle de matière active négative.

Des séparateurs 11 et 13 peuvent être prévus pour éviter tout court-circuit. En particulier, le séparateur 11 peut être constitué d'une membrane en Nafion® et le séparateur 13 d'un tissu en fibre minérale. Toutefois, d'autres membranes échangeuses d'ions, du téflon microporeux, des films cellulosiques, voire du papier spécialement traité à cet usage, de la laine de verre, des membranes en polymère et par exemple en polyéthylène ou en polypropylène, peuvent être utilisées en tant que séparateurs.

Plusieurs générateurs ou batteries électrochimiques unitaires tels que représentés sur la figure peuvent être utilisés, reliés entre eux en série ou en parallèle.

L'application des polymères conducteurs selon l'invention donnée ci-dessus n'a bien entendu été donnée qu'à titre illustratif, beaucoup d'autres applications pouvant être envisagées comme on l'a vu précédemment.

On va maintenant donner à titre d'exemples quelques procédés de préparation de polymères conducteurs selon l'invention, utilisables en particulier comme matière active positive d'électrode dans un générateur électrochimique tel que décrit ci-dessus, dans lequel la matière d'électrode négative est un alliage de lithium-aluminium et l'électrolyte une solution molaire de $LiClO_4$ dans du carbonate de propylène.

EXEMPLES 1 ET 2

On prépare tout d'abord de la polyaniline (PANi) par oxydation chimique de l'aniline, en milieu acide riche en fluorures, comme décrit dans le document FR-A-2 545 494, dénommé ci-après document FR. 50 mg de cette PANi sont ensuite soigneusement mélangés, dans un mortier, avec 10 mg de soufre en fleur et 10 mg de noir de carbone. L'ensemble est compressé sous deux tonnes, directement sur un collecteur en carbone d'un générateur électrochimique, pour faire une pastille de 13 mm de diamètre et de 0,5 mm d'épaisseur solidaire du collecteur.

Ce générateur contient comme électrolyte du carbonate de propylène contenant 1 mole de $LiClO_4$ et comme matière active d'électrode négative un alliage de lithium-aluminium. Ce générateur est soumis à des cycles de charge-décharge avec un courant constant de 0,5 mA. On obtient ainsi, après 30 cycles de charge-décharge, une pastille en polysulfure de polyaniline présentant une capacité massique supérieure d'environ 10% à celle d'une pastille équivalente ne contenant pas de soufre ; la capacité massique de la pastille en polyaniline seule est d'environ 90 Ah/kg et celle du polysulfure de polyaniline de 100 Ah/kg.

Dans ces conditions opératoires, la capacité massique maximum de l'électrode positive ne peut pas être obtenue au cours des premiers cycles charge-décharge car les réactions entre la polyaniline et le soufre doivent avoir le temps de se faire pour former le polysulfure de polyaniline. En conséquence, lors de la réalisation d'un générateur électrochimique avec un polymère conducteur selon l'invention, fabriqué dans les conditions opératoires ci-dessus, un certain nombre de cycles doivent être effectués avant d'utiliser ce générateur pour permettre la mise en forme des électrodes. Le nombre de cycles à effectuer est fonction du soin avec lequel est fait le mélange de la polyaniline, du soufre et du carbone.

La capacité massique de la pastille en polymère selon l'invention peut être améliorée si, au lieu d'utiliser 10 mg de soufre, on utilise 15 mg de sulfure de sodium anhydre. Le mélange entre la polyaniline, le sulfure de sodium et le noir de carbone doit alors être réalisé en boîte à gant.

EXEMPLE 3

On réalise tout d'abord une solution de 100 ml de soufre colloïdal comme décrit dans HANDBOOK of preparative inorganic chemistry-Brauer, vol. 1, 2nd Edition, Academic Press, 1963, p. 343. A la solution de soufre colloïdal est ajouté 0,5 g de polyaniline préparée par voie chimique comme dans le document FR. Après agitation pendant 48 heures de la solution, du soufre finement divise précipite dans la polyaniline. Après lavage par une solution d'acide sulfurique et par une solution d'acétonitrile dans un extracteur de Soxhlet, on obtient un polysulfure de polyaniline dont la masse a augmenté de 12% (en poids) par rapport à la polyaniline seule.

La capacité massique de la matière active d'électrode en polysulfure de polyaniline obtenu est supérieure d'environ 9% à la capacité massique de la polyaniline sans soufre, après 20 cycles de charge-décharge nécessaires pour permettre l'interaction entre la polyaniline et le soufre.

EXEMPLE 4

On dissout tout d'abord dans 10 ml de diméthylsulfoxide (DMSO) 50 mg de soufre. A cette solution on ajoute 100 mg de polyaniline préparée comme dans le document FR. On agite le mélange obtenu à 80°C pendant 2 heures puis on tire sous vide pour éliminer l'essentiel du DMSO. Le résidu obtenu est alors lavé dans un extracteur de Soxhlet avec de l'acétonitrile. On obtient alors 120 mg d'un produit de capacité massique supérieure à celle de la polyaniline exempte de soufre qui peut être utilisée comme masse active d'électrode positive dans un générateur électrochimique après lui avoir fait subir plusieurs cycles de charge-décharge. Après 20 cycles de charge-décharge l'amélioration est de 10% par rapport à la polyaniline seule.

EXEMPLE 5

20 mg de sulfure de sodium anhydre est agité sous atmosphère d'oxygène en présence de 21 mg de soufre en fleur et de 60 mg de polyaniline, obtenue par voie chimique, dans 50 ml d'éthanol absolu. Après agitation

pendant 5 heures, la solution est concentrée sous vide jusqu'à obtenir 10 ml de cette solution, puis diluée par de l'acétonitrile et filtrée. Enfin, le résidu est lavé à l'acétonitrile dans un extracteur de Soxhlet pendant 4 heures puis séché sous vide. On obtient ainsi 65 mg d'un produit auquel on fait subir 20 cycles de chargedécharge dans un générateur pour obtenir un polysulfure de polyaniline. Dans cet exemple, le soufre permet l'oxydation du sulfure de sodium en soufre qui précipite dans la suspension de polyaniline. La capacité massique est améliorée de 11% par rapport à la polyaniline seule.

EXEMPLE 6

De la même façon que dans l'exemple 5, on oxyde 30 mg de sulfure de sodium anhydre dans de l'éthanol absolu en présence de polyaniline avec 0,5 ml d'eau oxygénée à 110 volumes à la place du soufre. L'amélioration de la capacité massique est identique à celle mentionnée dans l'exemple 5.

EXEMPLES 7 ET 8

Dans une solution de 100 ml d'$H_2SO_4$ concentré, on ajoute 2 g de soufre en fleur, 1 g de fluorure d'ammonium, 4 $cm^3$ d'aniline et du sulfure d'hydrogène à saturation. On ajoute ensuite 4 g de persulfate d'ammonium puis on laisse réagir pendant 2 heures. La solution est ensuite filtrée puis lavée avec de l'acétonitrile dans un extracteur de Soxhlet. Après séchage sous vide, on obtient 4,5 g d'un produit constitué en grande partie de polysulfure de polyaniline utilisable comme matière active d'électrode.

On obtient le même résultat en utilisant 5 $cm^3$ d'eau oxygénée à 110 volumes à la place du persulfate d'ammonium.

EXEMPLE 9

Dans 100 ml d'une solution de bain "N" ($NH_4F$,2,3HF) contenant 5 g d'aniline, obtenue comme dans l'exemple 1, on fait barboter du sulfure d'hydrogène pendant 15 min. Puis sous atmosphère de sulfure d'hydrogéne on ajoute, en une fois, 4 g de persulfate d'ammonium. Après dilution à l'eau, filtration, lavage à l'acétonitrile dans un extracteur de Soxhlet puis séchage, on obtient 5,5 g d'un produit constitué en grande partie de polysulfure de polyaniline, qui peut être utilisé comme masse active d'électrode positive dans un générateur électrochimique.

EXEMPLE 10

On procède de la même façon que dans l'exemple 9 en remplaçant le persulfate d'ammonium par 4 $cm^3$ d'eau oxygénée à 110 volumes. On obtient ainsi 4,8 g d'un produit constitué en grande partie de polysulfure de polyaniline.

Les exemples 1 à 10 ci-dessus ont tous trait à la fabrication d'un polysulfure de la polyaniline. Il est cependant possible d'obtenir, dans les mêmes conditions opératoires, des polysulfures de la poly(para-aminodiphénylamine) en remplaçant à chaque fois l'aniline ou la polyaniline dans les exemples correspondants par la para-aminodiphénylamine ou la poly(para-aminodiphénylamine).

EXEMPLE 11

2 g d'orthotoluidine sont oxydés dans 50 $cm^3$ de bain "N" ($NH_4F$-2,3HF) à température ordinaire par 3 g de persulfate d'ammonium sous agitation pendant une heure. On obtient une poudre noire qui est lavée au Soxhlet à l'eau distillée puis à l'acétonitrile. Après filtration et séchage sous vide, on obtient 1,3 g de polyorthotoluidine.

On obtient des résultats équivalents en utilisant de la méta ou paratoluidine à la place de l'orthotoluidine ou même un mélange des trois isomères.

50 mg de ce matériau sont mélangés intimement avec 10 mg de noir d'acétylène et 5 mg de soufre puis humectés avec une suspension aqueuse de téflon. L'ensemble bien mélangé au mortier est compressé sous 3 tonnes, pour former une pastille d'environ 12 mm de diamètre. Cette pastille est ensuite mise sous vide et chauffée à 180°C pendant 24 heures.

La pastille ainsi traitée est alors montée dans un générateur électrochimique contenant environ 0,3 $cm^3$ de carbonate de propylène 2M en perchlorate de lithium et opposée à une électrode de lithium-aluminium préparée par voie électrochimique.

Les deux électrodes, de "polysulfure de polyorthotoluidine" et de lithium-aluminium sont séparées par une

membrane échangeuse de cations et en particulier une membrane de NAFION® qui a subi au préalable un traitement spécial au carbonate de propylène contenant du $LiClO_4$ pour fonctionner correctement.

L'ensemble obtenu est un générateur électrochimique rechargeable, dont la tension en circuit ouvert est au début de 2,9 V.

On fait alors subir à ce générateur des cycles de charge-décharge sous 0,5 mA entre 4 et 0,9 V. On constate que la capacité massique commence par diminuer légèrement puis croît pendant environ une cinquantaine de cycles pour se stabiliser aux environs de 30 coulombs. Ceci constitue une amélioration d'environ 10% de la capacité massique obtenue par rapport à un générateur réalisé avec seulement de la polyorthotoluidine.

Le matériau obtenu permet également de pouvoir travailler avec des densités de courant notablement plus importantes que celles utilisables avec la polyorthotoluidine seule. En effet, alors qu'avec de la polyorthotoluidine on est limité à des densités de courant de l'ordre de 1 à 2 mA par $cm^3$, il est possible d'utiliser avec le polysulfure de polyorthotoluidine, surtout pour la décharge, des densités de courant pouvant aller de 3 à 4 mA par $cm^2$ tout en conservant une capacité massique utilisable.

EXEMPLE 12

2 g d'aminodiphénylamine sont oxydés sous agitation pendant une heure dans du bain "N", en présence de 1 g de soufre en fleur, par 2,5 g de persulfate d'ammonium. Après lavage et séchage, on obtient 0,8 g d'un nouveau matériau dont 50 mg sont pastillés avec 10 mg de noir d'acétyléne et chauffés sous vide à 190°C pendant 8 heures. La pastille obtenue est montée et cyclée comme dans l'exemple 11.

Les résultats sont également plus intéressants qu'avec de la polyaminodiphénylamine utilisée seule sans combinaison avec le soufre. En effet, on obtient des capacités massiques de la matière active d'électrode polyamine + soufre supérieures d'environ 15% à la capacité de la polyamine utilisée seule, soit 140 Ah/kg comparés à 120 Ah/kg.

La difficulté de ce genre de mise en oeuvre est d'éviter d'avoir du soufre ou des polysulfures libres pouvant passer en solution et réagir avec la matière active d'électrode négative (phénomène d'auto-décharge). Un grand soin doit donc être apporté à la réalisation du séparateur qui doit fonctionner essentiellement par transport des ions de l'électrolyte du générateur (ions lithium notamment).

EXEMPLE 13

Une amélioration intéressante peut être apportée aux générateurs réalisés ci-dessus en utilisant un électrolyte solide, à la place d'un électrolyte dissous dans un solvant, ce qui élimine les problèmes d'auto-décharge avec les produits soufrés.

A cet effet, un générateur est monté comme dans l'exemple 12 mais en utilisant à la place du carbonate de propylène contenant du $LiClO_4$, du polyoxyde d'éthylène chargé en perchlorate de lithium. Cet électrolyte solide est réalisé par solubilisation des deux composants dans l'acétonitrile puis évaporation de ce dernier.

Au préalable on aura pris le soin de mélanger dans la composition de la pastille environ 20% de l'électrolyte solide.

On obtient ainsi un générateur avec une très faible auto-décharge (1% par mois). En revanche, les densités de courant utilisables sont plus faibles, car on est limité à environ 0,1 mA à 30°C.

EXEMPLE 14

On procède de la même façon que dans l'exemple 11 en remplaçant l'orthotoluidine par 3 g d'orthoaminophémol. On obtient 1,1 g de polysulfure de polyorthoaminophénol. La pastille formée est montée dans un générateur et présente une capacité massique de 160 Ah/kg au lieu de 130 Ah/kg pour une pastille en polyorthoaminophénol seule.

On obtient des résultats équivalents avec du méta ou du para aminophénol ou un mélange des trois isoméres.

EXEMPLE 15

On procède de la même façon que dans l'exemple 11 en remplaçant l'orthotoluidine par 2 g d'acide aminobenzoïque ; l'acide utilisé peut être l'acide comportant le groupement carboxyle en ortho, para ou méta de $NH_2$ ou un mélange de ces acides. On obtient 1,2 g d'un polymère polysulfuré qui monté dans le générateur présente une capacité massique de 110 Ah/kg au lieu de 90 Ah/kg pour un polymère sans soufre.

## Revendications

1. Procédé de préparation d'un polymère conducteur électronique azoté, caractérisé en ce qu'il comprend les étapes successives suivantes :

(a) préparer un polymère intermédiaire par polymérisation d'au moins un premier composé choisi parmi l'aniline, la para-aminodiphénylamine et leurs dérivés,

(b) charger le polymère intermédiaire d'au moins un second composé choisi parmi le soufre, un sulfure ou un polysulfure inorganique, et

(c) soumettre le polymère intermédiaire chargé à des cycles charge-décharge électrique afin d'obtenir un polysulfure de la polyaniline, un polysulfure de la poly(para-aminodiphénylamine), un polysulfure d'un dérivé de la polyaniline ou un polysulfure d'un derivé de la poly(para-aminodiphénylamine).

2. Procédé de préparation selon la revendication 1, caractérisé en ce que l'étape (b) consiste à mélanger intimement le polymère intermédiaire et le second composé, le second composé représentant 1 à 50% en poids du mélange polymère intermédiaire-second composé.

3. Procédé de préparation selon la revendication 1, caractérisé en ce que l'étape (b) consiste à faire précipiter le second composé dans une suspension du polymère intermédiaire en solution.

4. Procédé de préparation selon la revendication 1, caractérisé en ce que l'étape (b) consiste à oxyder un sulfure ou un polysulfure inorganique dans une suspension du polymère intermédiaire en solution.

5. Procédé de préparation d'un polymère conducteur électronique azoté, caractérisé en ce qu'il comprend les étapes suivantes :

(a') préparer un polymère intermédiaire par polymérisation d'au moins un premier composé choisi parmi la para-aminodiphénylamine, les toluidines, les aminophénols et les carboxyanilines, et

(b') oxyder le polymère intermédiaire dans une solution contenant au moins un second composé choisi parmi le soufre, un sulfure ou un polysulfure inorganique afin d'obtenir un polysulfure de la poly(para-aminodiphénylamine), un polysulfure de la polytoluidine, un polysulfure du polyaminophénol, ou un polysulfure de la carboxyaniline.

6. Procédé de préparation selon la revendication 5, caractérisé en ce que l'étape (b') consiste à oxyder le polymère intermédiaire dans une solution contenant du soufre colloïdal et/ou un polysulfure inorganique en suspension.

7. Procédé de préparation selon la revendication 5, caractérisé en ce que l'étape (b') consiste à oxyder le polymère intermédiaire dans une solution acide contenant un sulfure inorganique.

8. Procédé de préparation selon la revendication 7, caractérisé en ce que la solution acide est une solution riche en fluorures.

9. Procédé de préparation selon la revendication 8, caractérisé en ce que l'étape (a') consistant en une oxydation dans un milieu acide riche en fluorures, on réalise simultanément les étapes (a') et (b').

10. Procédé de préparation selon l'une quelconque des revendications 5 à 9, caractérisé en ce que l'oxydation est réalisée avec un agent oxydant choisi parmi le soufre, l'eau oxygénée, le tétroxyde d'osmium, un permanganate, un persulfate ou un bichromate d'un métal alcalin ou d'ammonium.

11. Procédé de préparation selon l'une quelconque des revendications 1 à 4, caractérisé en ce que le premier composé présente la formule générale (I) :

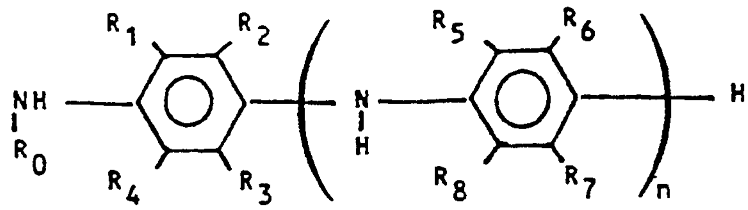

dans laquelle n est un nombre valant 0 ou 1 et $R_0$, $R_1$, $R_2$, $R_3$, $R_4$, $R_5$, $R_6$, $R_7$ et $R_8$, qui peuvent être identiques ou différents représentent l'hydrogène, un halogène, un groupement choisi parmi OH, $CH_3$, $NO_2$, $NH_2$, $CF_3$, $SO_2$, CN, SCN, OCN,

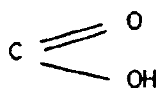, 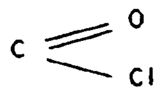, 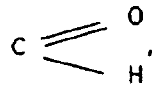, 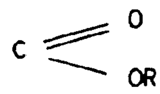, 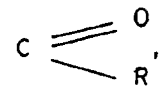,

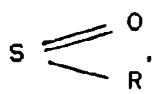, 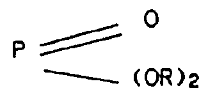,

$SO_2R$, SR, OR, R étant un radical alkyle linéaire ou ramifié, ou un radical aryle, ou représente un radical choisi parmi les radicaux alkyle, linéaire ou ramifié, et aryle comportant éventuellement un ou plusieurs substituants choisis dans le groupe comprenant OH, $NO_2$, $NH_2$, $CF_3$, $SO_2$, CN, CL, F, SCN, OCN,

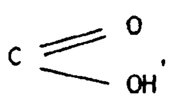, 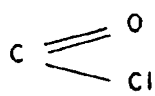, 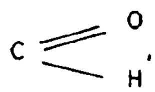, 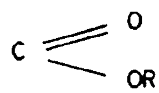, 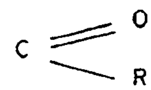,

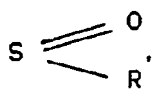, 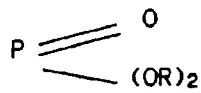,

$SO_2R$, SR, OR, R étant un radical alkyle linéaire ou ramifié, ou un radical aryle.

12. Procédé de préparation selon l'une quelconque des revendications 1 à 4, caractérisé en ce que le premier composé est choisi parmi l'aniline, la paraaminodiphénylamine, les toluidines, les aminophénols et les carboxyanilines.

13. Procédé de préparation selon l'une quelconque des revendications 1 à 4, caractérisé en ce que le premier composé présente la formule :

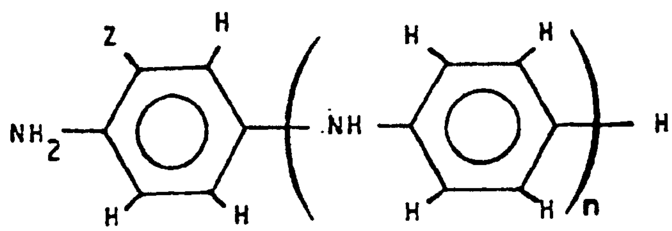

dans laquelle Z représente H, $CH_3$, OH ou COOH et n un nombre valant 0 ou 1, à condition que n=0 quand Z représente $CH_3$, OH ou COOH.

14. Procédé de préparation selon l'une quelconque des revendications 5 à 10, caractérisé en ce que le premier compose présente la formule :

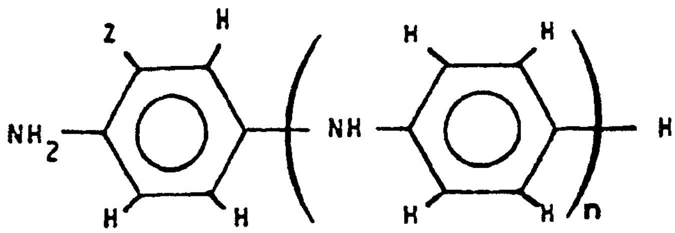

dans laquelle n est un nombre valant 0 ou 1 et Z représente $CH_3$, OH ou COOH quand n=0 et H quand n=1.

15. Procédé de préparation selon l'une quelconque des revendications 1 à 14, caractérisé en ce que le sulfure ou le polysulfure inorganique est un sulfure ou un polysulfure d'ammonium ou d'un metal alcalin.

16. Générateur électrochimique comportant dans un récipient étanche (1) un premier collecteur de courant

(3) recouvert d'une matière active positive (5), un second collecteur de courant (7) recouvert d'une matière active négative (9), les matières actives baignant dans un électrolyte (2), caractérisé en ce que la matière active positive est formée d'un polymère conducteur obtenu par le procédé selon l'une quelconque des revendications 1 à 15.

17. Générateur selon la revendication 16, caractérisé en ce que la matière active positive se présente sous la forme d'une pastille comprimée contenant du noir de carbone.

18. Générateur selon la revendication 16 ou 17, caractérisé en ce que la matière active négative (9) est formée d'une couche de lithium ou d'un alliage de lithium et d'aluminium et l'électrolyte (2) est du perchlorate de lithium dissous dans du carbonate de propylène.

## Ansprüche

1. Verfahren zur Herstellung eines elektrisch leitenden, stickstoffhaltigen Polymers, dadurch gekennzeichnet, daß es die folgenden, sukzessiven Verfahrensschritte umfaßt:

(a) Vorbereiten eines intermediären Polymers durch Polymerisation wenigstens einer ersten Verbindung, die unter dem Anilin, dem Para-Aminodiphenylamin und ihren Derivaten ausgewählt wird,

(b) Durchsetzen des intermediären Polymers mit wenigstens einer zweiten Verbindung die unter dem Schwefel, einem anorganischen Sulfid oder Polysulfid ausgewählt wird, und

(c) Unterwenfen des durchsetzten, intermediären Polymers unter elektrische Lade- und Entladezyklen, um ein Polyanilinpolysulfid, ein Poly(Pana-Aminodiphenylamin)Sulfid, ein Polysulfid eines Derivats des Polyanilins oder ein Polysulfid eines Derivats des Poly(Para-Aminodiphenylamins) zu erhalten.

2. Herstellungsverfahren nach Anspruch 1, dadurch gekennzeichnet, daß der Verfahrensschritt (b) darin besteht, daß man das intermediäre Polymer und die zweite Verbindung innig vermischt, wobei die zweite Verbindung 1 bis 50 Gewichtsprozent der Mischung aus intermediärem Polymer-zweiter Verbindung bildet.

3. Herstellungsverfahren nach Anspruch 1, dadurch gekennzeichnet, daß der Verfahrensschritt (b) darin besteht, daß man die zweite Verbindung in eine Suspension des intermediäre Polymers in Lösung ausfällt.

4. Herstellungsverfahren nach Anspruch 1, dadurch gekennzeichnet, daß der Verfahrensschritte (b) darin besteht, daß man ein anorganisches Sulfid oder Polysulfid in einer Suspension des intermediäre Polymers in Lösung oxydiert.

5. Verfahren zur Herstellung eines elektrisch leitenden, stickstoffhaltigen Polymers, dadurch gekennzeichnet, daß es die folgenden, sukzessiven Verfahrensschritte umfaßt:

(a') Vorbereiten ei nes intermediären Polymers durch Polymerisation wenigstens einer ersten Verbindung, die unter dem Para-Aminodiphenylamin, den Toluidinen, den Aminophenolen und den Karboxyanilinen ausgewählt wird,

(b') Oxydieren des intermediären Polymers in einer Lösung, die wenigstens eine zweite Verbindung enthält, die unter dem Schwefel, einem anorganischen Sulfid oder Polysulfid ausgewählt wird, um ein Poly(Para-Aminodiphenylamin)Sulfid, ein Polytoluidinpolysulfid, ein Polyaminophenolpolysulfid oder ein Karboxyanilinpolysulfid zu erhalten.

6. Herstellungsverfahren nach Anspruch 5, dadurch gekennzeichnet, daß der Verfahrensschritt (b') darin besteht, daß man das intermediäre Polymer in einer Lösung oxydiert, die kolloidalen Schwefel und/oder ein anorganisches Polysulfid in Lösung enthält.

7. Herstellungsverfahren nach Anspruch 5, dadurch gekennzeichnet, daß der Verfahrensschritt (b') darin besteht, daß man das intermediäre Polymer in einer sauren Lösung oxydiert, die ein anorganisches Sulfid enthält.

8. Herstellungsverfahren nach Anspruch 7, dadurch gekennzeichnet, daß die saure Lösung eine an Fluoriden reiche Lösung ist

9. Herstellungsverfahren nach Anspruch 8, dadurch gekennzeichnet, daß man die Verfahrensschritte (a') und (b') gleichzeitig durchführt, wobei der Verfahrensschritt (a') in einer Oxydation in einer an Fluoriden reichen Umgebung besteht.

10. Herstellungsverfahren nach einem der Ansprüche 5 bis 9, dadurch gekennzeichnet, daß die Oxydation mit einem Oxydationsmittel durchgeführt wird, das unter dem Schwefel, dem Perhydrol, dem Osmiumtetroxyd, einem Permanganat, einem Persulfat oder einem Bichromat eines Alkalimetalls oder des Ammoniums ausgewählt wird.

11. Herstellungsverfahren nach einem der Ansprüche 1 bis 4, dadurch gekennzeichnet, daß die erste Verbindung die allgemeine Formel (I) aufweist:

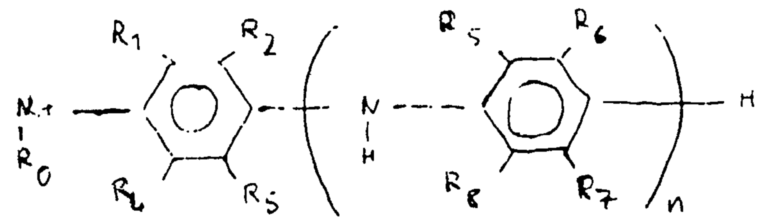

in der n eine Zahl mit dem Wert 1 oder 0 ist und $R_0$, $R_1$, $R_2$, $R_3$, $R_4$, $R_5$, $R_6$, $R_7$ und $R_8$, die gleich oder verschieden sein können, den Wasserstoff, ein Halogen, oder eine Gruppe, die aus OH, $CH_3$, $NO_2$, $NH_2$, $CF_3$, $SO_2$, CN, SCN, OCN,

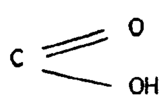 , 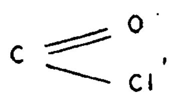 , 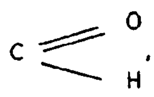 , 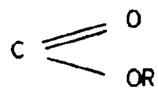 , 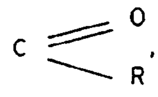 ,

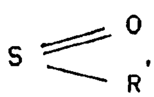 , 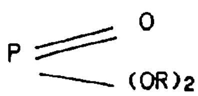 ,

$SO_2R$, SR, OR besteht, darstellt, wobei R ein linearer oder verzweigter Alkylrest oder ein Arylrest ist oder ein Rest darstellt, der aus den linearen oder verzweigten Alkylresten und den Arylresten ausgewählt wird, die eventuell einen oder mehrere Substituenten aufweisen, die aus der Gruppe ausgewählt werden, die OH, $NO_2$, $NH_2$, $CF_3$, $SO_2$, CN, Cl, F, SCN, OCN,

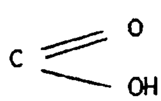 , 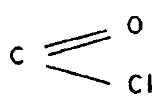 , 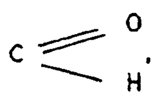 , 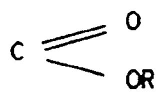 , 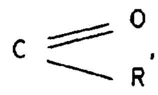 ,

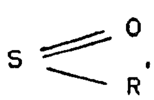 , 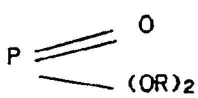 ,

$SO_2R$, SR, OR, umfaßt, wobei R ein linearer oder verzweigter Alkylrest oder ei n Arylrest ist.

12. Herstellungsverfahren nach einem der Ansprüche 1 bis 4, dadurch gekennzeichnet, daß die erste Verbindung aus dem Anilin, dem Paraaminodiphenylamin, den Toluidinen, den Aminophenolen und den Karboxyanilinen ausgewählt wird.

13. Herstellungsverfahnen nach einem der Ansprüche 1 bis 4, dadurch gekennzeichnet, daß die erste Verbindung die Formel aufweist :

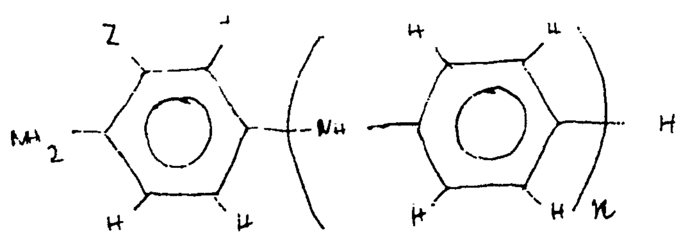

in der Z H, $CH_3$, OH oder COOH und n eine Zahl mit dem Wert 0 oder 1 darstellt, mit der Bedingung, daß n=0, wenn Z $CH_3$, OH oder COOH darstellst.

14. Herstellungsverfahren nach einem der Ansprüche 5 bis 10, dadurch gekennzeichnet, daß die erste Verbindung die Formel aufweist :

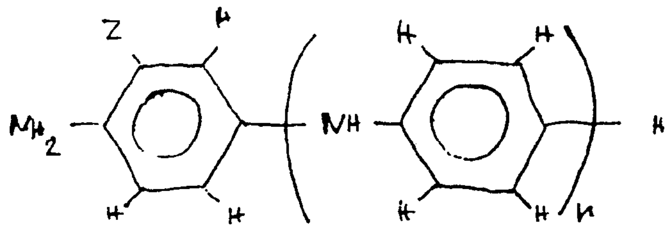

in der n eine Zahl mit dem Wert 0 oder 1 und Z $CH_3$, OH oder COOH, falls n=0, und H darstellt, falls n=1.

15. Herstellungsverfahren nach einem der Ansprüche 1 bis 14, dadurch gekennzeichnet, daß das anorganische Sulfid oder Polysulfid ein Sulfid oder Polysulfid des Ammoniums oder eines Alkalimetalls ist.

16. Elektrochemischer Generator in einem dichten Rezipienten mit einem ersten Stromkollektor (3), der mit einem aktiven, positiven Material (5) bedeckt ist, einem zweiten Stromkollektor (7), der mit einem aktiven, negativen Material (9) bedeckt ist, wobei die aktiven Materialien in einem Elektrolyten eingetaucht sind, dadurch gekennzeichnet, daß das aktive, positive Material aus einem leitenden Polymer gebildet ist, das durch das Verfahren nach einem der Ansprüche 1 bis 15 erhalten wird.

17. Generator nach Anspruch 16, dadurch gekennzeichnet, daß das aktive, positive Material sich in der Form eines komprimierten Blättchens darstellt, das Ruß enthält.

18. Generator nach Anspruch 16 oder 17, dadurch gekennzeichnet, daß das aktive, negative Material (9) aus einer Schicht aus Lithium oder einer Lithium- und Aluminiumlegierung gebildet wird und daß der Elektrolyt (2) in Propylenkarbonat aufgelöstes Lithiumperchlorat ist.

## Claims

1. Process for the preparation of a nitrogenous electronically conductive polymer, characterized in that it comprises the following successive stages :

(a) preparing an intermediate polymer by polymerizing at least one first compound chosen from among aniline, paraaminodiphenylamine and derivatives thereof,

(b) charging the intermediate polymer with at least one second compound chosen from among inorganic polysulphide, sulphide or sulphur and

(c) subjecting the charged intermediate polymer to electrical charging- discharging cycles in order to obtain a polysulphide of polyaniline, a polysulphide of poly(paraaminodiphenylamine), a polysulphide of a polyaniline derivative or a polysulphide of a poly(paraaminodiphenylamine) derivative.

2. Preparation process according to claim 1, characterized in that stage (b) consists of intimately mixing the intermediate polymer and the second compound, the latter representing 1 to 50% by weight of the intermediate polymer-second compound mixture.

3. Preparation process according to claim 1, characterized in that staged (b) consists of precipitating the second compound in a suspension of the intermediate polymer in solution.

4. Preparation process according to claim 3, characterized in that staged (b) consists of oxidizing an inorganic polysulphide or sulphide in a suspension of the intermediate polymer in solution.

5. Process for the preparation of a nitrogenous electronically conductive polymer, characterized in that it comprises the following stages :

(a') preparing an intermediate polymer by polymerizing at least one first compound chosen from among paraaminodiphenylamine, toluidines, aminophenols and carboxyanilines and

(b') oxidizing the intermediate polymer in a solution containing at least one second compound chosen from among inorganic polysulphide, sulphide or sulphur in order to obtain a polysulphide of poly(paraaminodiphenylamine), a polysulphide of polytoluidine, a polysulphide of polyaminophenol or a polysulphide of carboxyaniline.

6. Preparation process according to claim 5, characterized in that stage (b') consists of oxidizing the intermediate polymer in a solution containing colloidal sulphur and/or an inorganic polysulphide in suspension.

7. Preparation process according to claim 5, characterized in that stage (b') consists of oxidizing the intermediate polymer in an acid solution containing an inorganic sulphide.

8. Preparation process according to claim 7, characterized in that the acid solution is a fluoride-rich solution.

9. Preparation process according to claim 8, characterized in that stage (a') consists of oxidation in a fluoride-rich acid medium, so that stages (a') and (b') are simultaneously performed.

10. Preparation process according to any one of the claims 5 to 9, characterized in that oxidation is carried

out with an oxidizing agent chosen from among sulphur, hydrogen peroxide, osmium tetroxide, a permanganate, a persulphate or a bichromate of an alkali metal or ammonium.

11. Preparation process according to any one of the claims 1 to 4, characterized in that the first compound is in accordance with general formula (I) :

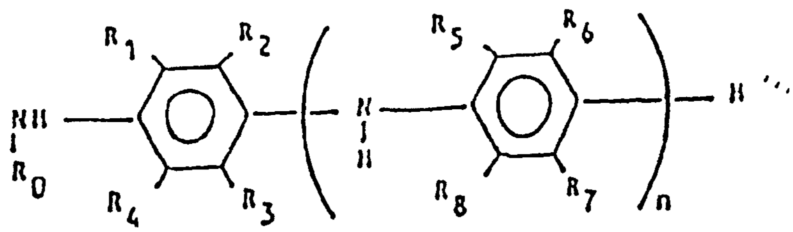

in which n is an integer representing 0 or 1 and $R_0$.... $R_8$, which can be the same or different, represent hydrogen, a halogen, a group chosen from among OH, $NO_2$, $NH_2$, $CF_3$, $SO_2$, CN, SCN, OCN,

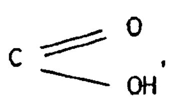, 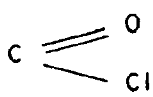, 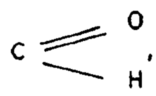, 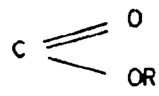, 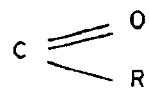,

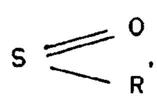, 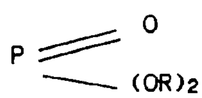,

$SO_2R$, SR, OR, R being a straight or branched alkyl radical, or an aryl radical, or represents a radical chosen from among aryl radicals and straight or branched alkyl radicals optionally having one or more substituents chosen from the group comprising OH, $CH_3$, $NO_2$, $NH_2$, $CF_3$, $SO_2$, CN, Cl, F, SCN, OCN,

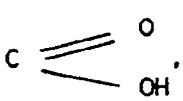, 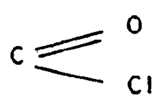, 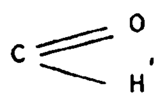, 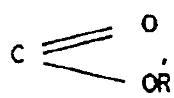, 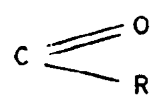,

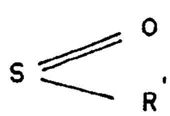, 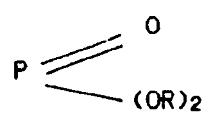,

$SO_2R$, SR, OR, R being a straight or branched alkyl radical, or an alkyl radical.

12. Preparation process according to any one of the claims 1 to 4, characterized in that the first compound is chosen from among aniline, paraaminodiphenylamine, toluidines, aminophenols and carboxyanilines.

13. Preparation process according to any one of the claims 1 to 4, characterized in that the first compound is of formula :

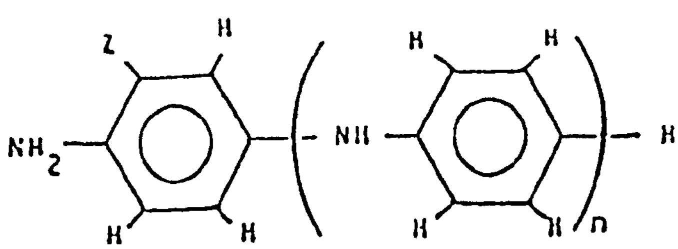

in which Z represents H, $CH_3$, OH or COOH and n represents 0 or 1, provided that n=0 when Z represents $CH_3$, OH or COOH.

14. Preparation process according to any one of the claims 5 to 10, characterized in that the first compound

is in accordance with the formula :

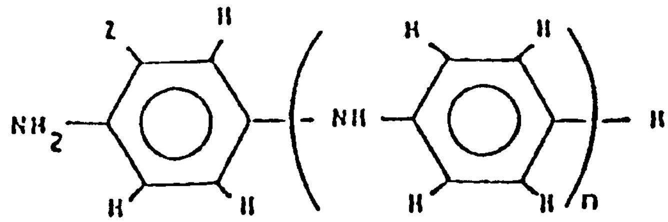

in which n is a number representing 0 or 1 and Z represents $CH_3$, OH or COOH when n=0 and H when n=1.

15. Preparation process according to any one of the claims 5 to 10, characterized in that the inorganic polysulphide or sulphide is a sulphide or polysulphide of ammonium or an alkali metal.

16. Electrochemical generator comprising in a tight container (1), a first current collector (3) covered with an active positive material (5), a second current collector (7) covered by an active negative material (9), the active materials being immersed in an electrolyte (2), characterized in that the positive active material is formed by a conductive polymer obtained by the process according to any one of the claims 1 to 15.

17. Generator according to claim 16, characterized in that the positive active material is in the form of a carbon black-containing compressed pellet.

18. Generator according to claims 16 or 17, characterized in that the negative active material (9) is formed from a layer of lithium or lithium-aluminium alloy and the electrolyte (2) from lithium perchlorate dissolved in propylene carbonate.

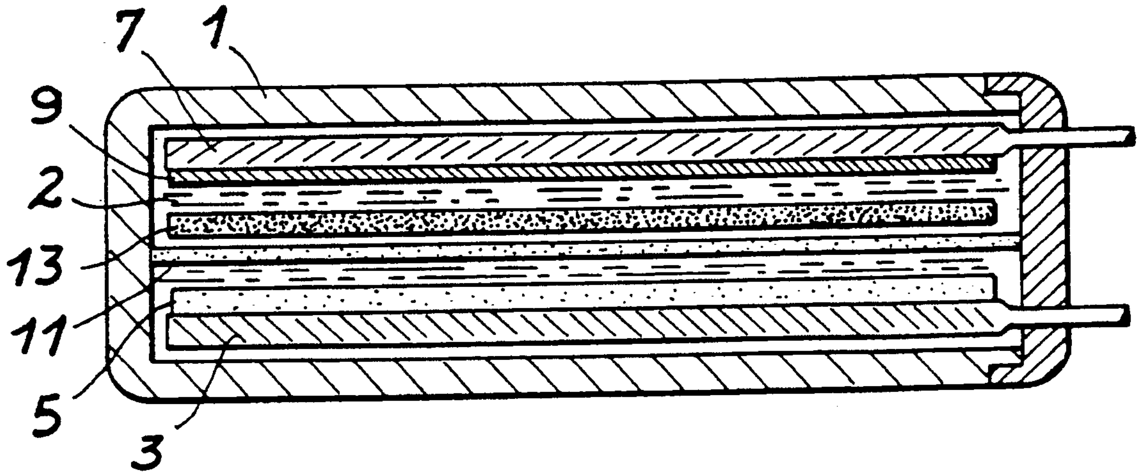
7
1
9
2
13
11
5
3